Europäisches Patentamt

European Patent Office

Office européen des brevets

(11) Veröffentlichungsnummer: **0 271 752 B1**

(19)

(12) **EUROPÄISCHE PATENTSCHRIFT**

(45) Veröffentlichungstag der Patentschrift: **01.12.93**

(21) Anmeldenummer: **87117532.9**

(22) Anmeldetag: **27.11.87**

(51) Int. Cl.5: **H02P 7/288**, H02P 7/29

(54) **Gleichstromsteller.**

(30) Priorität: **18.12.86 DE 3643221**

(43) Veröffentlichungstag der Anmeldung:
**22.06.88 Patentblatt 88/25**

(45) Bekanntmachung des Hinweises auf die
Patenterteilung:
**01.12.93 Patentblatt 93/48**

(84) Benannte Vertragsstaaten:
**AT CH DE FR GB LI NL**

(56) Entgegenhaltungen:
**DE-A- 2 100 929**
**DE-A- 2 166 360**
**GB-A- 1 142 124**
**US-A- 4 211 961**

**ELEKTRONIK no. 3, 1978, DE Seiten 61 - 65; K.
RISCHMUELLER: "600-W-MOTORSTEUERUNG
FUER NETZBETRIEB MIT HOHER SCHALTFRE-
QUENZ"**

(73) Patentinhaber: **Braun Aktiengesellschaft
Postfach 11 20
D-61466 Kronberg(DE)**

(72) Erfinder: **Bauer, Alfred
Schönbornring 3
D-6078 Neu-Isenburg 2(DE)**

**Beschreibung**

Gegenstand der Erfindung ist ein Gleichstromsteller mit einer parallel zur Ankerwicklung eines Gleichstrommotors geschalteten Freilaufdiode und einem in Reihe zur Ankerwicklung des Gleichstrommotors und einer Gleichspannungsquelle geschalteten steuerbaren Schaltelement, dessen Steueranschluß mit dem Ausgang eines Pulsbreitenmodulators verbunden ist, der einen Sollwertgeber für die Drehzahl des Gleichstrommotors enthält.

Aus der Zeitschrift "Elektronik", 1978, Heft 3, Seiten 61 bis 65 ist eine Schaltungsanordnung zur Regelung der Drehzahl eines Gleichstrommotors bekannt, bei der der Ankerstromkreis des Gleichstrommotors über einen Gleichstromsteller mit den Gleichspannungsanschlüssen einer an ein Wechselstromnetz angeschlossenen Gleichrichter-Brückenschaltung verbunden ist. Der Gleichstromsteller besteht aus einem steuerbaren Halbleiterschalter, der in Reihe zur Ankerwicklung des Gleichstrommotors und den Gleichspannungsanschlüssen der Gleichrichter-Brückenschaltung geschaltet ist. Parallel zur Ankerwicklung des Gleichstrommotors ist eine Freilaufdiode geschaltet. Der Steueranschluß des steuerbaren Halbleiterschalters ist mit einer Steuerschaltung verbunden, die eine Treiberstufe und einen Oszillator und Pulsbreitenmodulator enthält, die an eine Steuerspannungsquelle angeschlossen sind. Mittels eines Pulsbreitenstellers kann der gewünschte Sollwert der Drehzahl des Gleichstrommotors vorgegeben werden.

Im Betrieb legt der steuerbare Halbleiterschalter des Gleichstromstellers die gleichgerichtete Wechselspannung in schneller Folge an die Ankerklemmen des Gleichstrommotors, wobei während der Einschaltzeit des steuerbaren Halbleiterschalters der Ankerstrom durch den steuerbaren Halbleiterschalter fließt, während in der Ausschaltzeit des steuerbaren Halbleiterschalters der Ankerstrom durch die Freilaufdiode fließt. Durch Veränderung des Tastverhältnisses, d.h. dem Quotienten aus der Einschaltzeit und der aus der Summe der Einschalt-und Ausschaltzeit gebildeten Periodendauer, kann die Stromflußdauer des Ankerstromes variiert werden, so daß nahezu jede beliebige Drehzahl des Gleichstrommotors eingestellt werden kann. Die von der Steuerschaltung zur Ansteuerung des steuerbaren Halbleiterschalters ausgeführte Pulsbreitenmodulation macht von einer konstanten Periodendauer und damit konstanten Frequenz Gebrauch. Zu diesem Zweck wird eine Dreieck- oder Sägezahnspannung konstanter Amplitude und konstanter Frequenz in einem Komparator mit einer konstanten Steuerspannung verglichen, die den Sollwert für das Tastverhältnis bildet. Das Ausgangssignal des Komparators hängt somit von der Höhe der Steuerspannung ab, so daß entsprechend die Pulsbreite des Ausgangssignales moduliert werden kann.

Da zur Drehzahlverstellung eines Gleichstrommotors unter Verwendung eines Gleichstromstellers mit Pulsbreitenmodulation die Größe und zeitlichen Schwankungen der Gleichspannung zu Schwankungen des Ankerstromes des Gleichstrommotors führen, treten bei welliger Gleichspannung nicht unerhebliche Ankerstromschwankungen auf, die ohne zusätzliche Maßnahmen nicht von der Steuerschaltung zur Ansteuerung des steuerbaren Halbleiterschalters des Gleichstromstellers ausgeglichen werden können und zu stark erhöhten Stromwärmeverlusten im Anker des Motors führen. Diese Ankerstromschwankungen treten umso stärker auf, je weniger die üblicherweise aus einer gleichgerichteten, einphasigen Netz-Wechselspannung abgeleitete Gleichspannung geglättet wird. Entsprechende Filter zur Glättung und Siebung der welligen Gleichspannung sind aber aufwendig, teuer und nehmen erheblichen Platz in Anspruch.

Aufgabe der vorliegenden Erfindung ist es, einen Gleichstromsteller für einen Gleichstrommotor zu schaffen, der einfach aufgebaut ist, einen sicheren Betrieb des Gleichstrommotors gewährleistet und Überlastungen des Gleichstrommotors vermeidet und sicherstellt, daß der arithmetische Mittelwert der am Gleichstrommotor anliegenden Spannung nicht von der Größe oder den zeitlichen Schwankungen der am Gleichstromsteller anliegenden Gleichspannung, sondern ausschließlich von der den Drehzahl-Sollwert bestimmenden Steuerspannung der Steuerschaltung für den Gleichstromsteller abhängig ist und keine aufwendigen Glättungs- und Siebglieder erfordert.

Diese Aufgabe wird erfindungsgemäß durch das kennzeichnende Merkmal des Patentanspruches 1 gelöst.

Die erfindungsgemäße Lösung bewirkt neben einem sicheren Betrieb und einer Vermeidung von Überlastungen des Gleichstrommotors bei einfachem Aufbau des Gleichstromstellers einen äußerst gleichförmigen Ankerstrom des Gleichstrommotors, weil der arithmetische Mittelwert der am Gleichstrommotor anliegenden Spannung nicht von der Größe oder von den Schwankungen der am Gleichstrommotor und Gleichstromsteller anliegenden Gleichspannung, sondern allein von der Steuerspannung zur Drehzahl-Sollwertvorgabe in der Steuerschaltung zur Ansteuerung des Gleichstromstellers abhängig ist.

Das dem Steueranschluß des elektronischen Schalters zugeführte Signal kann entsprechend einer vorteilhaften Ausgestaltung der erfindungsgemäßen Lösung sowohl dem Steueranschluß des steuerbaren Schaltelementes bzw. dem Ausgang des Komparators mit Hysterese als auch dem Ausgang des steuerbaren Schaltelementes entnommen werden, wobei bei der letztgenannten Ausführungsform die auf die Schalt- und Speicherzeiten des steuerbaren Schaltelementes zurückzuführenden Zeitverschiebungen berücksichtigt werden.

Eine weitere vorteilhafte Ausgestaltung der erfindungsgemäßen Lösung ist dadurch gekennzeichnet, daß die Gleichspannung an einem parallel zur Gleichspannungsquelle und aus zwei in Reihe geschalteten Spannungsteilerwiderständen gebildeten Spannungsteiler abgreifbar ist, und daß parallel zum ersten Spannungsteilerwiderstand die Schaltstrecke des elektronischen Schalters geschaltet und das Integrationsglied an die Verbindung der beiden Spannungsteilerwiderstände angeschlossen ist.

Bei dieser Ausgestaltung der erfindungsgemäßen Lösung wird nicht die volle, am Gleichstromsteller und Gleichstrommotor anliegende Gleichspannung über den elektronischen Schalter an das Integrationsglied und den Eingang des Komparators mit Hysterese gelegt, sondern mittels des Spannungsteilers nur der Teil, der dem Quotienten des Widerstandswertes parallel zur Schaltstrecke des elektronischen Schalters zum Gesamtwiderstand des Spannungsteilers entspricht. Dadurch sind ebenfalls die Spannungsschwellen des Komparators mit Hysterese um den Faktor reduziert, der dem genannten Quotienten entspricht. Durch diese Verringerung der Spannungsschwellen besteht die Möglichkeit der Verwendung monolithisch integrierter Komparatoren bzw. Schmitt-Trigger.

Eine weitere vorteilhafte Ausgestaltung der erfindungsgemäßen Lösung besteht darin, daß der Steueranschluß des steuerbaren Schaltelementes zur Strombegrenzung zusätzlich mit dem Ausgang eines zweiten Zweipunktreglers verbunden ist, der einen zweiten Komparator mit Hysterese enthält, dessen nicht invertierender Eingang mit einer zweiten Steuerspannung beaufschlagt ist und dessen invertierender Eingang über ein RC-Glied an die Verbindung eines Lastanschlusses des steuerbaren Schaltelementes mit einem Anschluß eines Meßwiderstandes angeschlossen ist, dessen anderer Anschluß mit der Gleichspannungsquelle verbunden ist.

Diese Lösung beinhaltet eine einfache und schnell wirkende Strombegrenzung, die dem Überlastschutz des steuerbaren Schaltelementes und des Gleichstrommotors dient.

Anhand eines in der Zeichnung dargestellten Ausführungsbeispieles soll der der Erfindung zugrundeliegende Gedanke näher erläutert werden. Es zeigen:

Fig. 1 und 2 Schaltbilder eines Gleichstromstellers für einen Gleichstrommotor;

Fig. 3 ein Schaltbild gemäß Fig. 2 mit zusätzlicher Schaltung zur Begrenzung des Ankerstromes des Gleichstrommotors;

Fig. 4 eine graphische Darstellung der Drehzahl über dem Drehmoment bei Anwendung einer Schaltungsanordnung gemäß Fig. 3 und

Fig. 5 ein detailliertes Schaltbild eines Gleichstromstellers gemäß den Fig. 1 bis 3 mit zusätzlicher Übertemperaturabschaltung und Betriebsspannungsüberwachung zum Schutz des Gleichstrommotors.

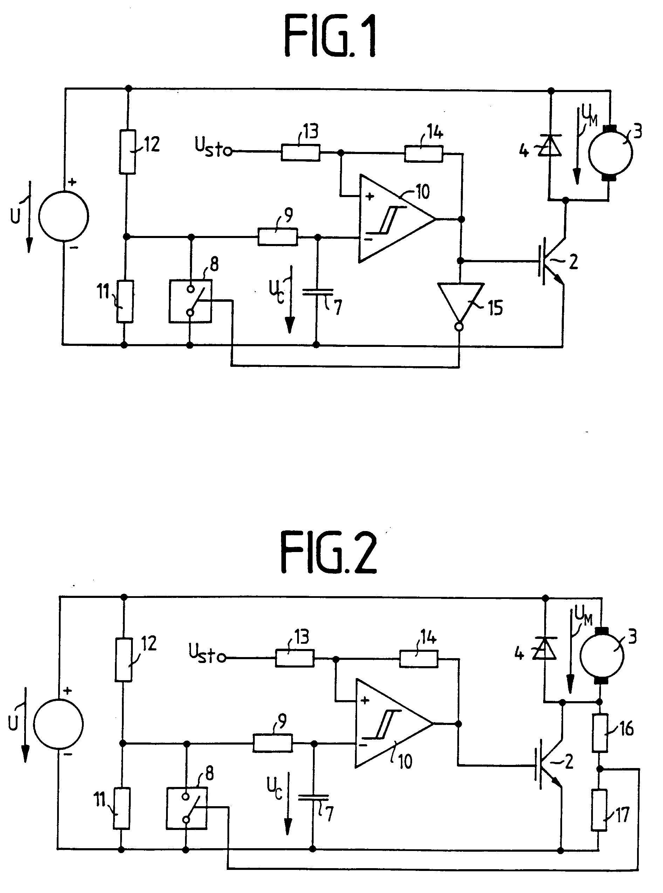

Die in Fig. 1 dargestellte Schaltungsanordnung zur Verstellung der Drehzahl eines Gleichstrommotors 3 zeigt ein in Reihe zur Ankerwicklung des Gleichstrommotors 3 geschaltetes steuerbares Schaltelement 2 in Form eines leitfähigkeitsmodulierten Leistungs-Feldeffekt-Transistors (COMFET) sowie einer parallel zur Ankerwicklung des Gleichstrommotors 3 geschalteten Freilaufdiode 4, die entgegengesetzt zur Richtung der Motorspannung $U_M$ gepolt ist.

Eine Gleichspannungsquelle U, die üblicherweise aus den Gleichspannungsanschlüssen einer an eine einphasige Wechselspannungsquelle angeschlossenen Gleichrichterbrücke besteht, dient sowohl zur Stromversorgung des Gleichstrommotors 3 als auch einer Steuerschaltung zur Ansteuerung des steuerbaren Schaltelementes 2.

Die Steuerschaltung enthält einen ersten Komparator mit Hysterese 10 bzw. Schmitt-Trigger, dessen nicht invertierender Eingang über einen Widerstand 13 mit einer Steuerspannung $U_{st}$ beaufschlagt ist. Zusätzlich ist der nicht invertierende Eingang des Schmitt-Triggers 10 über einen Widerstand 14 mit seinem Ausgang verbunden. Der invertierende Eingang des Schmitt-Triggers 10 ist an die Verbindung eines Integrationswiderstandes 9 mit einem Integrationskondensator 7 angeschlossen, die zusammen ein Integrationsglied bilden. Der andere Anschluß des Integrationswiderstandes 9 ist an die Verbindung zweier Spannungsteilerwiderstände 11, 12 angeschlossen, die zusammen einen parallel zur Gleichspannungsquelle U geschalteten Spannungsteiler bilden. Der andere Anschluß des Integrationskondensators 7 ist unmittelbar an die negative Klemme der Gleichspannungsquelle U angeschlossen.

Parallel zum ersten Spannungsteilerwiderstand 11 ist die Schaltstrecke eines elektronischen Schalters 8 geschaltet, dessen Steueranschluß über einen Inverter 15 mit dem Ausgang des ersten Komparators mit Hysterese bzw. Schmitt-Triggers 10 verbunden ist. Zusätzlich ist der Ausgang des Schmitt-Triggers 10 unmittelbar mit dem Steueranschluß des steuerbaren Schaltelementes 2 verbunden.

In einer zweiten in Fig. 2 dargestellten und ansonsten mit der Schaltung gemäß Fig. 1 übereinstimmenden Version ist der Steueranschluß des elektronischen Halbleiterschalters 8 nicht über den Inverter 15 mit dem Ausgang des Schmitt-Triggers 10 verbunden, sondern an die Verbindung zweier in Reihe geschalteter Widerstände 16, 17 angeschlossen, die parallel zur Schaltstrecke des steuerbaren Schaltelementes 2 liegen.

Nachstehend soll die Funktionsweise der Schaltungsanordnung gemäß Fig. 1 näher erläutert werden.

Analog zu der oben beschriebenen Funktion eines Gleichstromstellers zur Verstellung der Drehzahl eines Gleichstrommotors wird mittels des steuerbaren Schaltelementes 2 die Ankerwicklung des Gleichstrommotors 3 in schneller Folge an die Gleichspannungsquelle U geschaltet und wieder von ihr getrennt. Der Ankerstrom fließt dabei abwechselnd über die Schaltstrecke des steuerbaren Schaltelementes 2 bei eingeschaltetem steuerbaren Schaltelement 2 oder durch die parallel zur Ankerwicklung geschaltete Freilaufdiode 4 bei abgeschaltetem steuerbaren Schaltelement 2.

Die Ansteuerung des steuerbaren Schaltelementes 2 erfolgt mittels der oben beschriebenen Steuerschaltung, wobei beim dargestellten Ausführungsbeispiel eine schnelle Zweipunktregelung angewendet wird, bei der die am Spannungsteiler 11, 12 abgegriffene Teilspannung der Gleichspannungsquelle U über den elektronischen Halbleiterschalter 8 an das Integrationsglied 7, 9 gelegt wird, dessen Zeitkonstante in etwa der Zeitkonstante des Gleichstrommotors entspricht, die aus dem Quotienten der Ankerinduktivität und des Ankerwiderstandes bestimmt wird. Der Zweipunktregler wird durch das Integrationsglied 7, 9, den ersten Komparator mit Hysterese 10 bzw. Schmitt-Trigger und dem elektronischen Halbleiterschalter 8 gebildet.

Um den arithmetischen Mittelwert der am Gleichstrommotor 3 liegenden Spannung über den schnellen Zweipunktregler 7, 9, 10 auf einen gewünschten Sollwert zu regeln, muß die am Gleichstrommotor 3 liegende Spannung voll oder durch Spannungsteilung über den Spannungsteiler 11, 12 geteilt am Eingang des Zweipunktreglers liegen. Da aber die Motorspannung sich nicht auf das Bezugspotential des Zweipunktreglers (negative Klemme der Gleichspannungsquelle U) bezieht, sondern auf die positive Klemme, muß die am Gleichstrommotor 3 anliegende Spannung mit Hilfe des steuerbaren Halbleiterschalters 8 nachgebildet werden.

Wenn das steuerbare Schaltelement 2 leitet, liegt die Gleichspannungsquelle U am Gleichstrommotor 3 und die mittels des Spannungsteilers 11, 12 heruntergeteilte Gleichspannung am Eingang des Zweipunktreglers bzw. am Integrationsglied 7, 9.

Wenn das steuerbare Schaltelement 2 nicht leitet, liegt die Gleichspannungsquelle U nicht am Gleichstrommotor 3. Damit nun auch die mittels des Spannungsteilers 11, 12 heruntergeteilte Gleichspannung nicht am Eingang des Zweipunktreglers liegt, wird diese kurzgeschlossen, indem der elektronische Halbleiterschalter 8, der über dem unteren Spannungsteilerwiderstand 11 liegt, in den leitenden Zustand gesteuert wird. Somit liegt am Eingang des Zweipunktreglers die heruntergeteilte Motorspannung, d.h. bei geöffnetem elektronischen Halbleiterschalter 8 liegt die Teilspannung der Gleichspannungsquelle U am Integrationswiderstand 9, während bei geschlossenem elektronischen Halbleiterschalter 8 negatives oder Massepotential am Integrationswiderstand 9 liegt.

Die somit am invertierenden Eingang des ersten Komparators mit Hysterese bzw. Schmitt-Triggers 10 anliegende integrierte Motor-Teilspannung $U_c$ wird im Komparator mit Hysterese bzw. Schmitt-Trigger mit einer den Sollwert der Motorspannung bzw. die gewünschte Drehzahl repräsentierenden Steuerspannung $U_{st}$ verglichen. In Abhängigkeit von diesem Vergleich steht am Ausgang des ersten Schmitt-Triggers 10 ein entsprechendes Steuersignal an oder nicht und führt entsprechend zur Ansteuerung des steuerbaren Schaltelementes 2 bzw. über den Inverter 15 zur Ansteuerung des steuerbaren Halbleiterschalters 8.

Infolge der Rückkopplung des Ausgangs des ersten Schmitt-Triggers 10 auf den Steueranschluß des steuerbaren Halbleiterschalters 8 liegt am Eingang des Integrationsgliedes 7, 9 eine impulsförmige Spannung an, deren arithmetischer Mittelwert der Steuerspannung $U_{st}$ entspricht. Da das steuerbare Schaltelement 2 ebenfalls vom Ausgangssignal des Schmitt-Triggers 10 gesteuert wird, entspricht die am Gleichstrommotor 3 anliegende Spannung $U_c$ dieser impulsförmigen Spannung, ist jedoch um das Spannungsteilerverhältnis

$$\frac{R_{11} + R_{12}}{R_{11}}$$

größer. Auf diese Weise verhält sich der Gleichstrommotor 3 so als wenn er mit einer reinen Gleichspannung betrieben würde, deren Wert dem arithmetischen Mittelwert der Motorspannung $U_M$ entspricht. Dadurch ist die erfindungsgemäße Schaltungsanordnung weitestgehend unabhängig von Schwankungen oder Welligkeiten der Eingangsspannungsquelle und die Motorspannung bzw. Drehzahl des Gleichstrommotors 3 nahezu ausschließlich von der Höhe der Steuerspannung

$U_{st}$ abhängig.

Die Funktionsweise der Schaltungsanordnung gemäß Fig. 2 entspricht im wesentlichen der der Schaltungsanordnung gemäß Fig. 1 mit dem Unterschied, daß die Ansteuerung des steuerbaren Halbleiterschalters 8 (in Abhängigkeit)von der an der Schaltstrecke des steuerbaren Schaltelementes 2 anliegenden Spannung abhängig ist, die über die Widerstände 16, 17 abgegriffen wird. Dadurch werden Schaltverzögerungen und Speicherzeiten des steuerbaren Schaltelementes 2 berücksichtigt und eine noch gleichmäßigere Regelung der Drehzahl des Gleichstrommotors 3 erzielt.

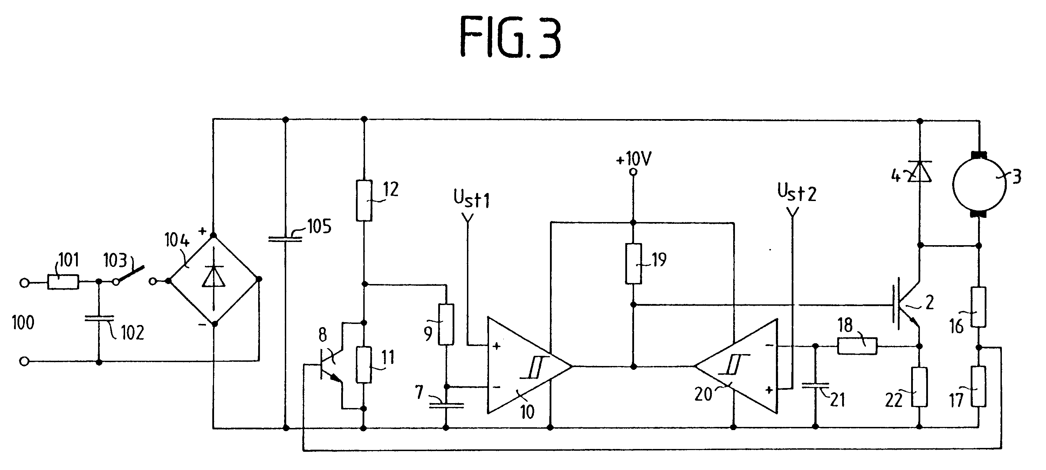

Der in Fig. 3 dargestellte G1eichstromsteller für einen Gleichstrommotor mit zusätzlicher Überstrombegrenzung weist analog zur Schaltungsanordnung gemäß den Figuren 1 und 2 ein in Reihe zur Ankerwicklung eines Gleichstrommotors 3 geschaltetes steuerbares Schaltelement 2 sowie eine parallel zur Ankerwicklung des Gleichstrommotors 3 geschaltete Freilaufdiode 4 auf. Die in dieser Schaltung detailliert dargestellte Eingangsschaltung zur Spannungsversorgung des Gleichstrommotors 3 und der Steuerschaltung für die Ansteuerung des steuerbaren Schaltelementes 2 weist einen einphasigen Wechselspannungsanschluß 100, einen Längswiderstand 101 sowie einen Querkondensator 102, einen Schalter 103 sowie eine Gleichrichterbrücke 104 auf, parallel zu deren Gleichspannungsanschlüssen ein Glättungskondensator 105 geschaltet ist.

Analog zur Schaltungsanordnung gemäß den Figuren 1 und 2 weist die Steuerschaltung zur Ansteuerung des steuerbaren Schaltelementes 2 einen ersten schnellen Zweipunktregler auf, der aus einem ersten Komparator mit Hysterese bzw. Schmitt-Trigger 10, einem Integrationsglied 7, 9 und einem steuerbaren Halbleiterschalter 8 besteht. Die Schaltstrecke des in diesem Ausführungsbeispiel als Transistor dargestellten steuerbaren Halbleiterschalters 8 ist parallel zu einem ersten Spannungsteilerwiderstand 11 geschaltet, der zusammen mit einem zweiten Spannungsteilerwiderstand 12 parallel zum Glättungskondensator 105 geschaltet ist und einen Spannungsteiler bildet.

Der Integrationswiderstand 9 ist einerseits an die Verbindung der beiden Spannungsteilerwiderstände 11, 12 und andererseits an den invertierenden Eingang des ersten Komparators mit Hysterese bzw. Schmitt-Triggers 10 bzw. einen Anschluß des Integrationskondensators 7 angeschlossen, dessen anderer Anschluß mit dem negativen Gleichspannungsanschluß bzw. Massepotential verbunden ist.

Der nicht invertierende Eingang des ersten Komparators mit Hysterese bzw. Schmitt-Triggers 10 ist mit einer ersten Steuerspannung $U_{St1}$ beaufschlagt, die üblicherweise über ein Potentiometer von einer konstanten Gleichspannungsquelle abgegriffen wird, die von einer an den Glättungskondensator 105 angeschlossenen Stabilisierungsschaltung abgegeben wird. Die Spannungsversorgung des Schmitt-Triggers 10 erfolgt ebenfalls von einer stabilisierten Gleichspannungsquelle von beispielsweise +10 Volt.

Zusätzlich zu der insoweit den Schaltungsanordnungen gemäß den Figuren 1 und 2 entsprechenden Steuerschaltung ist ein zweiter schneller Zweipunktregler vorgesehen, der aus einem zweiten Komparator mit Hysterese bzw. Schmitt-Trigger 20, einem an den invertierenden Eingang des Schmitt-Triggers 20 angeschlossenen RC-Glied 18, 21 und einem in Reihe zur Ankerwicklung des Gleichstrommotors 3 und zur Laststrecke des steuerbaren Schaltelementes 2 geschalteten Meßwiderstand 22 besteht. An den nicht invertierenden Eingang des zweiten Schmitt-Triggers 20 ist eine zweite Steuerspannung $U_{St2}$ angelegt.

Der Steueranschluß des steuerbaren Ha1bleiterschalters 8 ist analog zur Schaltung gemäß Fig. 2 an die Verbindung zweier Widerstände 16, 17 angeschlossen, die parallel zur Schaltstrecke des steuerbaren Schaltelementes 2 und des Meßwiderstandes 22 geschaltet sind.

Die Ausgänge der beiden Komparatoren mit Hysterese bzw. Schmitt-Trigger 10, 20 sind unmittelbar und mit dem Steueranschluß des steuerbaren Schaltelementes 2 sowie über einen Außenwiderstand 19 mit der stabilisierten Spannungsquelle von +10 Volt verbunden.

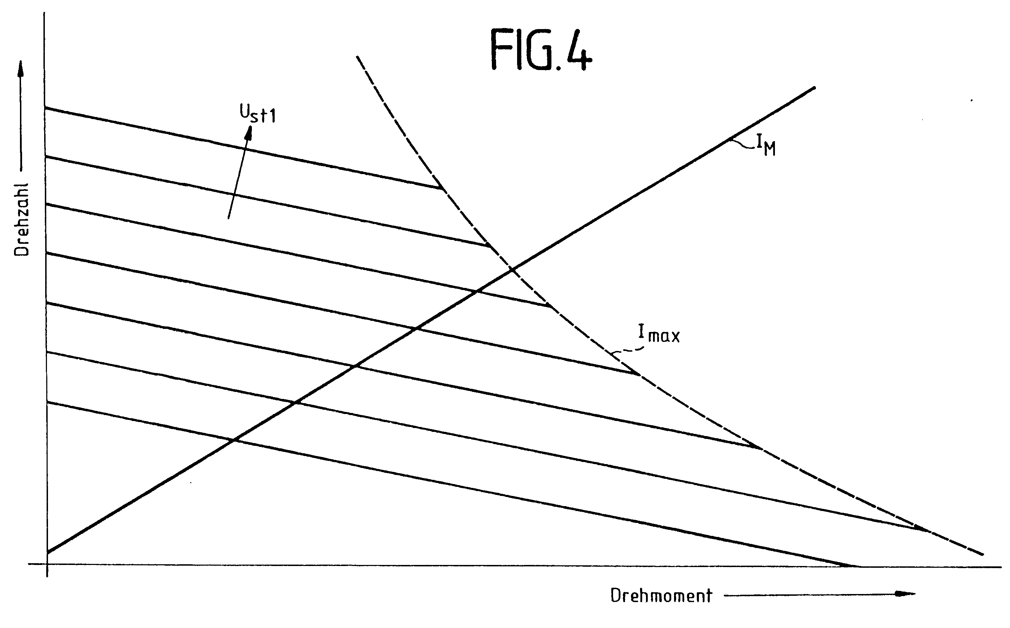

Nachstehend soll die Funktionsweise der Schaltungsanordnung gemäß Fig. 3 im Zusammenhang mit dem in Fig. 4 dargestellten Drehzahl-Drehmoment-Diagramm eines Permanentmagnet-Gleichstrommotors näher erläutert werden.

Die Funktionsweise des ersten schnellen Zweipunktreglers mit dem Schmitt-Trigger 10, dem Integrationsglied 7, 9 und dem elektronischen Schalter 8 verhält sich identisch zur Funktionsweise der im Zusammenhang mit den Figuren 1 und 2 erläuterten Schaltung. Mit Hilfe des zweiten schnellen Zweipunktreglers wird jedoch der arithmethische Mittelwert $I_{av}$ des Stromes durch das steuerbare Schaltelement 2 auf einen Maximalwert begrenzt, wobei der sich dabei ergebende Motorstrom $I_M$ von der Motordrehzahl und den sonstigen konstanten Größen des Gleichstrommotors 3 abhängig ist.

Der durch das steuerbare Schaltelement 2 fließende Strom erzeugt in dem Meßwiderstand 22 eine Meßspannung, die im RC-Glied 18, 21 integriert und dem invertierenden Eingang des zweiten Komparators mit Hysterese 20 zugeführt wird. Da am nicht invertierenden Eingang des zweiten Komparators mit Hysterese 20 die den Maximalwert des Stromes festlegende Steuerspannung $U_{St2}$ anliegt, wird bei Überschreiten des Maximalstromes durch den über das steuerbare Schaltelement 2 fließenden Strom der Ausgang des Komparators mit Hysterese 20 aktiv und bestimmt die Ansteuerung des steuerbaren Schaltelementes 2, da beide Ausgänge der Komparatoren 10, 20 in Bezug auf den Außenwiderstand 19 einen sogenannten Open-Kollektor-Ausgang haben, wodurch eine verdrahtete ODER-Funktion erreicht wird.

Vernachlässigt man die Durchlaßverluste im steuerbaren Schaltelement 2 und der Freilaufdiode 4, so ergibt sich für den Motorstrom $I_M$ folgende Abhängigkeit vom arithmetischen Mittelwert des durch das steuerbare Schaltelement 2 fließenden Stromes $I_{av}$:

$$I_M = \frac{U}{U_M} \cdot I_{av}$$

Darin bedeutet U die von der Gleichspannungsquelle abgegebene Versorgungsspannung und $U_M$ der arithmetische Mittelwert der Spannung am Gleichstrommotor 3.

Mit dem Einsatz der Strombegrenzung ergibt sich für die Motordrehzahl n folgende Gleichung

$$n = K \left( U \cdot \frac{I_{av}}{I_M} - I_M \cdot R_a \right)$$

in der $R_a$ der Ankerwiderstand des Gleichstrommotors 3 und K eine von den Motordaten abhängige Konstante ist. Aus dieser Gleichung ergibt sich die in Fig. 4 gestrichelt dargestellte Drehzahlkennlinie bei einsetzender Strombegrenzung.

Dadurch, daß dem Eingang des zweiten Zweipunktreglers 18, 20, 21, 22 die dem Strom durch den elektronischen Schalter 2 proportionale Spannung am Widerstand 22 zugeführt wird, hält der zweite Zweipunktregler 18, 20, 21, 22 den arithmetischen Mittelwert des Stromes durch den elektronischen Schalter 2 konstant und nicht den arithmetischen Mittelwert des Motorstromes. Dies ist insbesondere bei Antrieben für Küchenmaschinen erwünscht. Wenn der zweite Zweipunktregler 18, 20, 21, 22 den ersten Zweipunktregler 7, 8, 9, 10 ablöst und arbeitet, bewirkt dies ein Konstanthalten der dem Gleichstrommotor 3 zugeführten elektrischen Leistung.

Fig. 4 zeigt verschiedene Drehzahl-Drehmoment-Kennlinien, wobei der Parameter die Steuerspannung $U_{St1}$ am nicht invertierenden Eingang des ersten Komparators mit Hysterese 10 ist. Bei einsetzender Strombegrenzung gehen die durchgezogen dargestellten, von der ersten Steuerspannung $U_{st1}$ abhängenden Kennlinien bedingt durch die Regelung des arithmetischen Mittelwertes der Motorspannung bei Überschreiten des maximalen Stromes in die gestrichelt dargestellte Kennlinie über. Diese sogenannte Sicherungskennlinie wird vorteilhafterweise so gelegt, daß der sich im Stillstand des Gleichstrommotors 3 ergebende Motorstrom gerade noch nicht zur Entmagnetisierung der Permanentmagnete führt.

Ein wesentlicher Vorteil der beschriebenen Strombegrenzung besteht darin, daß deutlich niedrigere Motorstromwerte bei höheren Drehzahlen die Folge sind, was der Kommutierung des Gleichstrommotors und damit der Bürstenstandzeit zugute kommt.

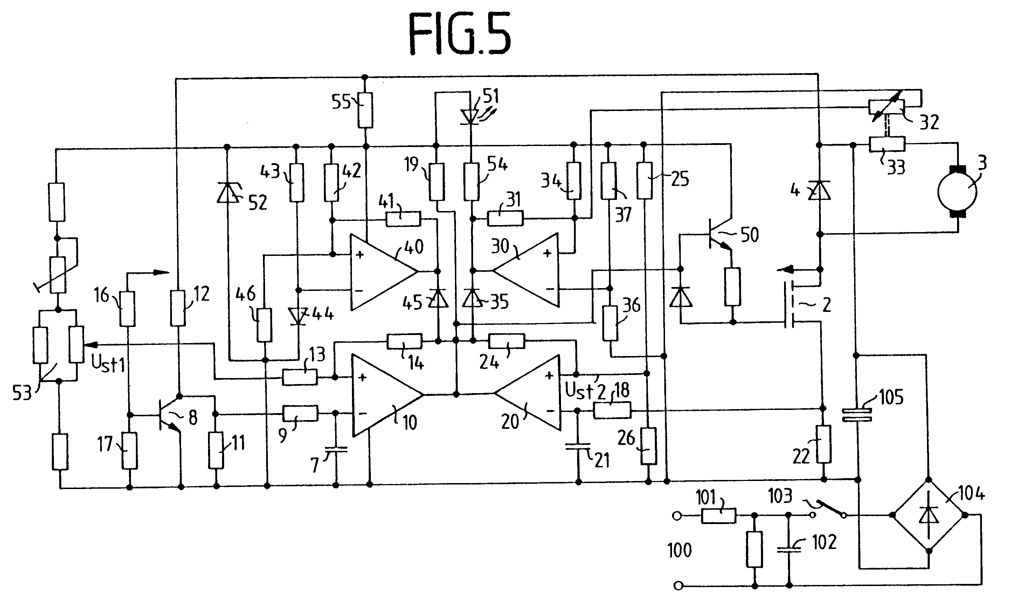

Das in Fig. 5 dargestellte vollständige Schaltbild eines Gleichstromstellers weist eine Eingangs-Gleichrichterschaltung sowie eine die beiden Komparatoren mit Hysterese 10, 20 enthaltende Ansteuerschaltung für das steuerbare Schaltelement 2 auf, die in ihrer Anordnung und Funktion den vorstehend beschriebenen Ausführungsbeispielen entsprechen, wobei gleiche Bezugsziffern gleiche Schaltelemente bezeichnen.

In dem in Fig. 5 dargestellten Ausführungsbeispiel wird die Steuerspannung des ersten Komparators mit Hysterese 10 an einem Spannungsteiler mit Potentiometer 53 eingestellt, während die Steuerspannung des zweiten Komparators mit Hysterese 20 an einem aus der Reihenschaltung der beiden Widerstände 25, 26 bestehenden Spannungsteiler abgegriffen wird, der an die Gleichspannungsquelle angeschlossen ist.

Die Betriebsspannung des Gleichstromstellers wird über einen Widerstand 55 von der am Glättungskondensator 105 anliegenden Gleichspannung abgegriffen. Zusätzlich ist eine Z-Diode 52 vorgesehen, die ebenfalls der Einstellung der Betriebsspannung zur Speisung der Komparator-Schaltkreise und zur Erzeugung der Steuerspannungen sowie zum Betrieb eines zur Ansteuerung des steuerbaren Schaltelementes 2 dienenden Emitterfolgers 50 dient.

Zusätzliche Bestandteile des in Fig. 5 dargestellen Gleichstromstellers sind zwei weitere Komparatoren mit Hysterese 30, 40, die zur Übertemperaturabschaltung und Überwachung der Betriebsspannung der Steuerelektronik des elektronischen Gleichstromstellers dienen.

Die elektronische Übertemperaturabschaltung dient dazu, den Gleichstrommotor 3 abzuschalten, bevor der Kupferdraht der Ankerwicklung eine maximale Temperatur von beispielsweise 120°C erreicht hat. Da die rotierende Ankerwicklung einer unmittelbaren Messung mit einem Sensor nicht ohne weiteres zugänglich ist, wird die Erwärmung der Ankerwicklung an einer anderen Stelle nachgebildet, indem ein niederohmiger Stromerfassungswiderstand 33 geeigneter Größe und Belastbarkeit vorgesehen ist, durch den der den Ankerdraht erwärmende Ankerstrom fließt und ebenfalls für die Erwärmung des niederohmigen Stromerfassungswiderstandes 33 sorgt.

Die sich am Stromerfassungswiderstand 33 einstellende Temperatur wird mittels eines thermisch mit dem Stromerfassungswiderstand 33 gekoppelten Heißleiter-Widerstandes 32 erfaßt, der mit dem nicht invertierenden Eingang eines dritten Komparators mit Hysterese 30 verbunden ist. Der andere Anschluß des Heißleiter-Widerstandes 32 ist an Bezugspotential angeschlossen.

Der nicht invertierende Eingang des dritten Komparators mit Hysterese 30 ist zusätzlich über einen Widerstand 34 mit dem positiven Pol der Eingangsspannung sowie über einen weiteren Widerstand 31 mit seinem Ausgang verbunden. Darüber hinaus ist der Ausgang des dritten Komparators mit Hysterese 30 mit der Kathode einer Diode 35 verbunden, deren Anode an die Verbindung der Ausgänge der beiden ersten Komparatoren mit Hysterese 10, 20 angeschlossen ist. Der invertierende Eingang des dritten Komparators mit Hysterese 30 ist an einen Spannungsteiler 36, 37 angeschlossen, an dem die Eingangsspannung anliegt.

Bei einer Temperaturerhöhung des Stromerfassungswiderstandes 33 und damit der Ankerwicklung des Gleichstrommotors 3 ändert der Heißleiter-Widerstand 32 seinen Widerstandswert in negativer Richtung. Bei Unterschreiten eines vorgegebenen Wertes schaltet der dritte Komparator mit Hysterese 30 am Ausgang auf niedriges Potential und zieht über die Diode 35 die Ausgänge des ersten und zweiten Komparators mit Hysterese 10, 20 ebenfalls auf niedriges Potential. Damit wird das steuerbare Schaltelement 2 über die Ansteuerschaltung 50 ständig gesperrt, so daß kein Ankerstrom fließt und damit der Gleichstrommotor 3 abgeschaltet wird.

Mit dem Wechsel des Ausgangspotentials des dritten Komparators mit Hysterese 30 auf niedriges Potential fließt ein Strom über den Widerstand 54 und die Leuchtdiode 51, wobei die Leuchtdiode 51 aufleuchtet. Damit wird angezeigt, daß der Motor aufgrund von Überhitzung abgeschaltet wurde.

Aufgrund der Unterbrechung des Ankerstromes kühlt der Stromerfassungswiderstand 33 langsam ab, so daß der Widerstandswert des mit ihm thermisch verbundenen Heißleiter-Widerstandes 32 erhöht wird bis ein vorgegebener Wert erreicht wird, durch den der Ausgang des dritten Komparators mit Hysterese 30 wieder auf hohes Potential schaltet, woraufhin die Ausgänge der beiden ersten Komparatoren mit Hysterese 10, 20 wieder wirksam werden und in der zuvor im Zusammenhang mit den Figuren 1 bis 3 beschriebenen Funktionsweise das steuerbare Schaltelement ansteuern, so daß der Gleichstrommotor 3 wieder in Betrieb genommen wird.

Zur Überwachung der Betriebsspannung der Steuerelektronik des Gleichstromstellers dient ein vierter Komparator mit Hysterese 40, wodurch verhindert werden soll, daß beim Einschalten des Gleichstromstellers ein Strom durch das steuerbare Schaltelement 2 fließt bevor die Betriebsspannung der Steuerelektronik, die beispielsweise nominell 15 Volt beträgt, einen Mindestwert von ca. 10 Volt erreicht hat, was zu einer thermischen Überlastung des steuerbaren Schaltelementes 2 führen würde.

Zur Überwachung der Betriebsspannung ist der nicht invertierende Eingang des vierten Komparators mit Hysterese 40 mit einem Spannungsteiler 42, 46 verbunden, während der invertierende Eingang des vierten Komparators mit Hysterese 40 an die Anode einer Diode 44 einerseits und einen an den positiven Pol der Eingangsspannung angeschlossenen Widerstand 43 angeschlossen ist. Die Kathode der Diode 44 ist an die Bezugsspannung angeschlossen. Darüber hinaus ist der nicht invertierende Eingang des vierten Komparators mit Hysterese 40 über einen weiteren Widerstand 41 mit seinem Ausgang verbunden, der auch an die Kathode einer Diode 45 angeschlossen ist, deren Anode mit den Ausgängen der beiden ersten Komparatoren mit Hysterese 10, 20 verbunden ist.

Die an der Steuerelektronik des Gleichstromstellers anliegende Betriebsspannung wird durch den Spannungsteiler 42, 46 geteilt an den nicht invertierenden Eingang des vierten Komparators mit Hysterese 40 gelegt, während am invertierenden Eingang als Referenzspannung die Durchlaßspannung der Diode 44 anliegt, die von einem Querstrom, der mittels des Widerstandes 43 eingestellt werden kann, durchflossen wird. Wenn beim Einschalten des Gleichstromstellers die Spannung am nicht invertierenden Eingang des vierten Komparators mit Hysterese 40 die Spannung am invertierenden Eingang, die der Durchlaßspannung der Diode 44 entspricht, im Wert um einen bestimmten Betrag übersteigt, schaltet der Ausgang des vierten Komparators mit Hysterese 40 auf hohes Potential und gibt die Funktion der übrigen Komparatoren 10, 20, 30 frei. Dies ist dann der Fall, wenn die Betriebsspannung den durch die Dimensionierung der Widerstände gewählten Mindestwert der Betriebsspannung von beispielsweise 10 Volt erreicht hat. Zuvor hält der Ausgang des vierten Komparators mit Hysterese 40 die Ausgänge der übrigen Komparatoren mit Hysterese 10, 20, 30 auf niedrigem Potential und damit den Eingang der Ansteuerschaltung 50 für das steuerbare Schaltelement 2, das somit gesperrt ist, so daß kein Ankerstrom fließen kann.

**Patentansprüche**

1. Gleichstromsteller mit einer parallel zur Ankerwicklung (3) eines Gleichstrommotors geschalteten Freilaufdiode (4) und einem in Reihe zur Ankerwicklung des Gleichstrommotors und einer Gleichspannungsquelle geschalteten steuerbaren Schaltelement (2), dessen Steueranschluß mit dem Ausgang eines Pulsbreitenmodulators verbunden ist, der einen Sollwertgeber für die Drehzahl des Gleichstrommotors enthält,
**dadurch gekennzeichnet,**
daß der Pulsbreitenmodulator als Zweipunktregler ausgebildet ist, der einen ersten Komparator mit Hysterese (10) enthält, dessen Eingänge einerseits mit einer ersten, dem Drehzahl-Sollwert entsprechenden Steuerspannung ($U_{St1}$) beaufschlagt und andererseits mit einem Integrationsglied (9, 7) verbunden sind, daß der Ausgang des ersten Komparators mit Hysterese (10) mit dem Steueranschluß des steuerbaren Schaltelementes (2) verbunden ist und daß der Steueranschluß des elektronischen Schalters (8) mit einem Signal des steuerbaren Schaltelementes (2) in der Art beaufschlagt ist, daß der elektronische Schalter (8) immer den umgekehrten Schaltzustand wie das steuerbare Schaltelement (2) aufweist, und daß das Integrationsglied (9,7) mit Hilfe des elektronischen Schalters (8) an eine Spannung gelegt wird, welche die am Gleichstrommotor (3) anliegende Spannung nach bildet.

2. Gleichstromsteller nach Anspruch 1,
**dadurch gekennzeichnet,**
daß der Steueranschluß des elektronischen Schalters (8) an den Ausgang des mit dem Steueranschluß des steuerbaren Schaltelementes (2) verbundenen Komparator mit Hysterese (10) angeschlossen ist.

3. Gleichstromsteller nach Anspruch 1,
**dadurch gekennzeichnet,**
daß der Steueranschluß des elektronischen Schalters (8) an die Verbindung zweier parallel zur Schaltstrecke des steuerbaren Schaltelementes (2) geschalteter Widerstände (16, 17) angeschlossen ist.

4. Gleichstromsteller nach Anspruch 1,
**dadurch gekennzeichnet,**
daß die Gleichspannung an einem parallel zur Gleichspannungsquelle und aus zwei in Reihe geschalteten Spannungsteilerwiderständen (11, 12) gebildeten Spannungsteiler abgreifbar ist, und daß parallel zum ersten Spannungsteilerwiderstand (11) die Schaltstrecke des elektronischen Schalters (8) geschaltet und das Integrationsglied (9, 7) an die Verbindung der beiden Spannungsteilerwiderstände (11, 12) angeschlossen ist.

5. Gleichstromsteller nach einem der vorstehenden Ansprüche,
**dadurch gekennzeichnet,**
daß der Steueranschluß des steuerbaren Schaltelementes (2) zur Strombegrenzung zusätzlich mit dem Ausgang eines zweiten Zweipunktreglers (18, 20, 21, 22) verbunden ist, der einen zweiten Komparator mit Hysterese (20) enthält, dessen nicht invertierender Eingang mit einer zweiten Steuerspannung ($U_{St2}$) beaufschlagt ist und dessen invertierender Eingang über ein RC-Glied (18, 21) an die Verbindung eines Lastanschlusses des steuerbaren Schaltelementes (2) mit einem Anschluß eines Meßwiderstandes (22) angeschlossen ist, dessen anderer Anschluß mit der Gleichspannungsquelle (1) verbunden ist.

6. Gleichstromsteller nach Anspruch 5,
**dadurch gekennzeichnet,**
daß das RC-Glied (18, 21) einen einerseits sowohl mit dem invertierenden Eingang des zweiten Komparators mit Hysterese (20) und einem ersten Anschluß eines Kondensators (21) und andererseits mit einem Lastanschluß des steuerbaren Schaltelementes (2) verbundenen Widerstand (18) enthält und daß der andere Anschluß des Kondensators (21) mit der Gleichspannungsquelle (1) verbunden ist.

7. Gleichstromsteller nach Anspruch 6,
**dadurch gekennzeichnet,**
daß ein in Reihe zur Ankerwicklung des Gleichstrommotors (3) geschalteter Stromerfassungswiderstand (33) thermisch mit einem Heißleiter-Widerstand (32) gekoppelt ist, der an den nicht invertierenden Eingang eines dritten Komparators mit Hysterese (30) angeschlossen ist, daß der invertierende Eingang des dritten Komparators mit Hysterese (30) an einen Spannungsteiler (36, 37) angeschlossen ist, der mit den Anschlüssen der Gleichspannungsquelle verbunden ist, und daß der Ausgang des dritten Komparators mit Hysterese (30) über eine kathodenseitig mit seinem Ausgang verbundene Diode (35) mit den Ausgängen des ersten und zweiten Komparators mit Hysterese (10, 20) verbunden ist, derart, daß bei einem bestimmten Erwärmungsgrad des vom Ankerstrom durchflossenen Stromerfassungswiderstandes (33) das Ausgangspotential des dritten Komparators mit Hysterese (30) von hohem auf niedriges Potential umschaltet und die Ansteuerung des steuerbaren Schaltelementes (2) unterbricht.

**8.** Gleichstromsteller nach Anspruch 7,
**dadurch gekennzeichnet**
daß der nicht invertierende Eingang eines vierten Komparators mit Hysterese (40) an einen an die Gleichspannungsquelle angeschlossenen Spannungsteiler (42, 46) angeschlossen ist, daß der invertierende Eingang des vierten Komparators mit Hysterese (40) an die Verbindung eines Widerstandes (43) mit einer kathodenseitig an das Bezugspotential der Gleichspannungsquelle angeschlossenen Diode (44) angeschlossen ist, und daß der Ausgang des vierten Komparators mit Hysterese (40) über eine kathodenseitig mit seinem Ausgang verbundene Diode (45) mit den Ausgängen des ersten und zweiten Komparators mit Hysterese (10, 20) verbunden ist, derart, daß in Abhängigkeit von den Widerstandswerten des Spannungsteilers (42,46) das Ausgangspotential des vierten Komparators mit Hysterese (40) bei einem Mindestwert der Spannung der Gleichspannungsquelle von niedrigem auf hohes Potential umschaltet und die Ansteuerung des steuerbaren Schaltelementes (2) ermöglicht.

**Claims**

**1.** A direct-current adjusting device, with a freewheeling diode (4) which is connected in parallel with the armature winding (3) of a direct-current motor, and with a controllable switching element (2) which is connected in series with the armature winding of the direct-current motor and a direct-current voltage source, the control terminal of said switching element being connected to the output of a pulse duration modulator comprising a setpoint device for the rotational speed of the direct-current motor,
**characterized in that** the pulse duration modulator is configured as a two-step controller comprising a first comparator with hysteresis (10) having applied to its one input a first control voltage ($U_{st1}$) corresponding to the setpoint value of speed, while its other input is connected to an integrating element (9, 7), that the output of the first comparator with hysteresis (10) is connected to the control terminal of the controllable switching element (2), and that a signal of the controllable switching element (2) is applied to the control terminal of an electronic switch (8) in such a fashion that the switch condition of the electronic switch (8) is invariably inverse to that of the controllable switching element (2), and that, by means of the electronic switch (8), the integrating element (9, 7) is applied to a voltage reproducing the voltage residing at the direct-current motor (3).

**2.** The direct-current adjusting device as claimed in claim 1,
**characterized in that** the control terminal of the electronic switch (8) is connected to the output of the comparator with hysteresis (10) connected to the control terminal of the controllable switching element (2).

**3.** The direct-current adjusting device as claimed in claim 1,
**characterized in that** the control terminal of the electronic switch (8) is connected to the junction of two resistors (16, 17) connected in parallel with the switching circuit of the controllable switching element (2).

**4.** The direct-current adjusting device as claimed in claim 1,
**characterized in that** the DC voltage can be tapped at a voltage divider connected in parallel with the DC voltage source and comprised of two series-connected voltage-dividing resistors (11, 12), and that the switching circuit of the electronic switch (8) is connected in parallel with the first voltage-dividing resistor (11), and the integrating element (9, 7) is connected to the junction of the two voltage-dividing resistors (11, 12).

**5.** The direct-current adjusting device as claimed in any one of the preceding claims,
**characterized in that** the control terminal of the controllable switching element (2), for current-limiting purposes, is further connected to the output of a second two-step controller (18, 20, 21, 22) including a second comparator with hysteresis (20) which has applied to its non-inverting input a second control voltage ($U_{st2}$) and whose inverting input is connected, via an RC element (18, 21), to the junction of a load terminal of the controllable switching element (2) and a lead of a measuring resistor (22) having its other lead connected to the DC voltage source (1).

**6.** The direct-current adjusting device as claimed in claim 5,
**characterized in that** the RC element (18, 21) comprises a resistor (18) having its one lead connected to both the inverting input of the second comparator with hysteresis (20) and a first lead of a capacitor (21), while its other lead is connected to a load terminal of the controllable switching element (2), and that the second lead of the capacitor (21) is connected to the DC voltage source (1).

**7.** The direct-current adjusting device as claimed in claim 6,
**characterized in that** a current-detecting resistor (33) connected in series with the armature winding of the DC motor (3) is in thermal contact with an NTC resistor (32) connected to the non-inverting input of a third comparator with hysteresis (30), that the inverting input of the third comparator with hysteresis (30) is connected to a voltage divider (36, 37) connected to the terminals of the DC voltage source, and that the output of the third comparator with hysteresis (30) is connected to the outputs of the first and second comparator with hysteresis (10, 20) through a diode (35) having its cathode connected to its output, such that when the current-detecting resistor (33) through which armature current flows is heated to a predetermined temperature, the output potential of the third comparator with hysteresis (30) switches from high to low potential, interrupting control of the controllable switching element (2).

**8.** The direct-current adjusting device as claimed in claim 7,
**characterized in that** the non-inverting input of a fourth comparator with hysteresis (40) is connected to a voltage divider (42, 46) connected to the DC voltage source, that the inverting input of the fourth comparator with hysteresis (40) is connected to the junction of a resistor (43) and a diode (44) having its cathode connected to the reference potential of the DC voltage source, and that the output of the fourth comparator with hysteresis (40) is connected to the outputs of the first and second comparator with hysteresis (10, 20) through a diode (45) having its cathode connected to its output, such that, in dependence on the resistances of the voltage divider (42, 46), the output potential of the fourth comparator with hysteresis (40) switches from low to high potential when the voltage of the DC voltage source has reached a minimum value, thus enabling the control of the controllable switching element (2).

**Revendications**

**1.** Convertisseur direct de courant continu, comprenant une diode de roue libre (4) montée en parallèle avec l'enroulement d'induit (3) d'un moteur à courant continu et un élément de commutation (2) commandé monté en série avec l'enroulement d'induit de ce moteur et avec une source de courant continu, élément dont la borne de commande est reliée à la sortie d'un modulateur d'impulsions en durée, qui contient un générateur de valeur de consigne pour la vitesse de rotation du moteur à courant continu,
caractérisé en ce que
le modulateur d'impulsions en durée est réalisé comme un régulateur à deux positions, qui contient un premier comparateur à hystérésis (10) dont les entrées reçoivent d'une part une première tension de commande ($U_{st1}$) correspondant à la valeur de consigne pour la vitesse de rotation et sont reliées d'autre part à un élément intégrateur (9, 7), que la sortie du premier comparateur (10) est reliée à la borne de commande de l'élément de commutation (2) commandé, que la borne de commande de l'interrupteur électronique (8) est alimentée de telle manière par un signal de l'élément de commutation (2) commandé que l'interrupteur électronique (8) présente toujours l'état de commutation inverse de celui de l'élément de commutation (2) commandé, et que l'élément intégrateur (9, 7) est connecté à l'aide de l'interrupteur électronique (8) à une tension qui reproduit la tension appliquée aux bornes du moteur à courant continu (3).

**2.** Convertisseur direct de courant continu selon la revendication 1, caractérisé en ce que la borne de commande de l'interrupteur électronique (8) est raccordée à la sortie du comparateur à hystérésis (10) relié à la borne de commande de l'élément de commutation (2) commandé.

**3.** Convertisseur direct de courant continu selon la revendication 1, caractérisé en ce que la borne de commande de l'interrupteur électronique (8) est raccordée à la connexion entre elles de deux résistances (16, 17) montées en parallèle avec le circuit de coupure de l'élément de commutation (2) commandé.

**4.** Convertisseur direct de courant continu selon la revendication 1, caractérisé en ce que la tension continue peut être prélevée sur un diviseur de tension monté en parallèle avec la source de tension continue et constitué de deux résistances (11, 12) branchées en série, que le circuit de coupure de l'interrupteur électronique (8) est branché en parallèle avec la première résistance (11) du diviseur de tension et que l'élément intégrateur (9, 7) est raccordé à la connexion entre elles des deux résistances (11, 12) du diviseur de tension.

5. Convertisseur direct de courant continu selon une des revendications précédentes, caractérisé en ce que, en vue de la limitation du courant, la borne de commande de l'élément de commutation (2) commandé est reliée en outre à la sortie d'un deuxième régulateur à deux positions (18, 20, 21, 22), régulateur qui contient un deuxième comparateur à hystérésis (20) dont l'entrée non inverseuse reçoit une deuxième tension de commande ($U_{st2}$) et dont l'entrée inverseuse est raccordée à travers un élément RC (18, 21) à la connexion d'une borne de charge de l'élément de commutation (2) commandé à une borne d'une résistance de mesure (22) dont l'autre borne est reliée à la source de tension continue (1).

6. Convertisseur direct de courant continu selon la revendication 5, caractérisé en ce que l'élément RC (18, 21) comporte une résistance (18) reliée d'une part à la fois à l'entrée inverseuse du deuxième comparateur à hystérésis (20) et une première borne d'un condensateur (21) et d'autre part à une borne de charge de l'élément de commutation (2) commandé, et que l'autre borne du condensateur (21) est reliée à la source de tension continue (1).

7. Convertisseur direct de courant continu selon la revendication 6, caractérisé en ce qu'une résistance détectrice de courant (33), montée en série avec l'enroulement d'induit du moteur à courant continu (3), est couplée thermiquement à une thermistance (32) raccordée à l'entrée non inverseuse d'un troisième comparateur à hystérésis (30), que l'entrée inverseuse de ce troisième comparateur est raccordée à un diviseur de tension (36, 37) relié aux bornes de la source de tension continue, et que la sortie du troisième comparateur (30) est reliée aux sorties du premier (10) et du deuxième comparateur (20) à travers une diode (35) dont la cathode est connectée à la sortie du troisième comparateur (30), l'agencement étant tel que lorsque la résistance détectrice de courant (33), parcourue par le courant d'induit, atteint un degré d'échauffement déterminé, le potentiel de sortie du troisième comparateur (30) est commuté d'un potentiel haut à un potentiel bas et la commande de l'élément de commutation (2) est interrompue.

8. Convertisseur direct de courant continu selon la revendication 7, caractérisé en ce que l'entrée non inverseuse d'un quatrième comparateur à hystérésis (40) est raccordée à un diviseur de tension (42, 46) branché sur la source de tension continue, que l'entrée inverseuse du quatrième comparateur (40) est raccordée à la connexion d'une résistance (43) à une diode (44) dont la cathode est connectée au potentiel de base de la source de tension continue et que la sortie du quatrième comparateur (40) est reliée aux sorties du premier (10) et du deuxième comparateur (20) à travers une diode (45) dont la cathode est connectée à la sortie du quatrième comparateur (40), l'agencement étant tel qu'en fonction des valeurs de résistance du diviseur de tension (42, 46), le potentiel de sortie du quatrième comparateur (40) commute d'un potentiel bas à un potentiel haut et permet la commande de l'élément de commutation (2) à une valeur minimale de la tension de la source de tension continue.

# FIG.1

# FIG.2

# FIG.3

FIG.4

FIG.5

$U_{st}+2,18$

$U_{st}1$